# EUROPEAN PATENT SPECIFICATION

(11) **EP 2 028 091 B1**
(45) Date of publication and mention of the grant of the patent: **23.10.2013**
(21) Application number: 08252449.7
(22) Date of filing: 17.07.2008
(51) Int. Cl.: B62K 11/04, B62K 11/10, B62K 19/30

(54) **Motorcycle frame**
Motorradrahmen
Cadre de motocyclette

(30) Priority: 19.07.2007 JP 2007188841; 19.06.2008 JP 2008160085
(43) Date of publication of application: 25.02.2009
(73) Proprietor: Yamaha Hatsudoki Kabushiki Kaisha, Shizuoka-ken Shizuoka 438-8501 (JP)
(72) Inventor: Okamoto, Naoki, Iwata-shi, Shizuoka-ken 438-8501 (JP)
(74) Representative: Moreland, David

(56) References cited:
- EP-A- 1 405 785
- EP-A- 1 584 549
- JP-A- 2006 088 892
- JP-U- 64 030 791
- US-A1- 2003 047 930
- US-A1- 2004 238 242

## Description

### FIELD OF THE INVENTION

The present invention relates to a motorcycle and a frame structure of a motorcycle, and in particular relates to an attachment structure of a swing unit.

### BACKGROUND TO THE INVENTION

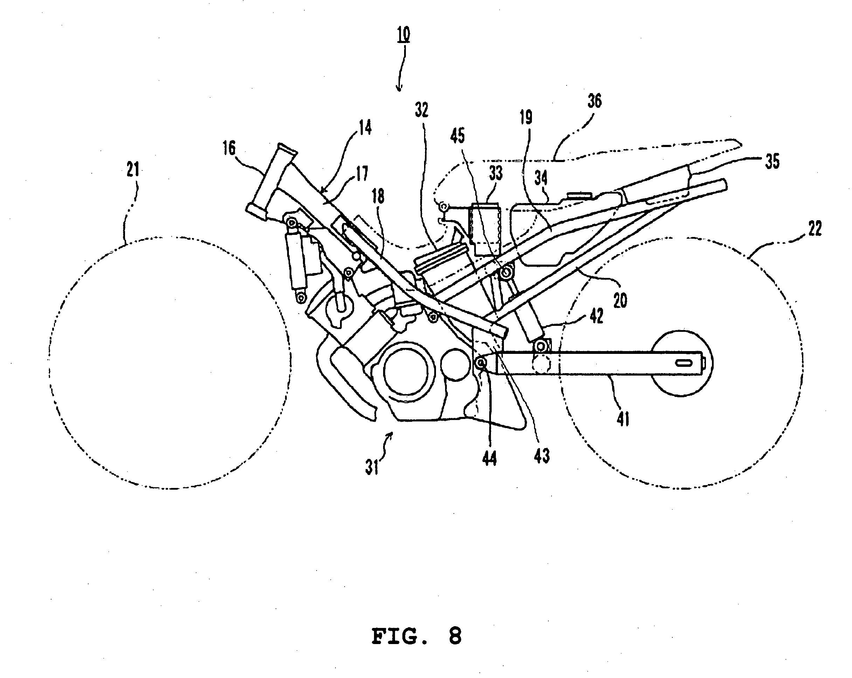

In a conventional motorcycle, various members such as a driving member (power unit), a seat, and various electric components are mounted on a body frame, such as is disclosed in, for example, JP-A-2006-88892. The arrangement disclosed in JP-A-2006-88892 on which the preamble of independent claim 1 is based, is shown in Fig. 8 which shows a frame 14 of a motorcycle 10 , wherein the frame 14 is provided with a head pipe 16, a main tube 17, left and right down tubes 18 (sub-frames), and left and right seat rails 19. Further, the frame 14 shown in FIG. 8 is provided with left and right backstays 20. The main tube 17 is a structural member extending obliquely downward to the rear of a vehicle body from the head pipe 16. The down tubes 18 are attached to a lower part of the main tube 17 and extend to the left rear and the right rear of the vehicle body. In the illustrated example of the prior art, the left and right seat rails 19 are respectively coupled to the left and right down tubes 18. In FIG. 8, reference numeral 21 denotes a front wheel, and reference numeral 22 denotes a rear wheel (drive wheel).

In the illustrated example, a swing unit 41 includes a swing arm (rear arm) for supporting the rear wheel 22 for pivot movement. A fore-end of the swing unit 41 supports a pivot shaft 44 of the swing unit 41 for the pivot movement via a bracket 43 at a rear end of the down tube 18. In addition, a lower end of a cushion unit 42 is attached to an intermediate part of the swing arm, and an upper end of the cushion unit 42 is attached to a cross member 45 that is spanned between the left and the right seat rails 19. Thereby, the swing unit 41 is structured to vertically swing in its rear part.

The swing unit vertically swings while the vehicle is running. At this time, a large force acts on a frame that pivotally supports the swing unit. Also, for example, when the vehicle travels along a curved path, twisting force acts on a portion supporting the swing arm. In order to improve travelling performance of the motorcycle, it is desirable that the rigidity of the frame is strong enough to withstand such force. In addition, although it is preferable to lighten the frame, there is a problem that the frame becomes heavier by attaching a bracket to a portion that supports the swing unit for the pivot movement.

JP64-030791 describes a frame for a motorcycle having a main frame affixed to left and right planar members. An engine attaches via two fixing bolts to two points on each of the left and right members and also to a collar mounted to the main frame. A rear swing arm upon which the rear wheel is mounted is attached via a hole in each of the left and right members.

### SUMMARY OF THE INVENTION

Aspects of the invention are defined in the independent claims. Preferred features of the invention are defined in the dependent claims.

Described herein by way of information is a motorcycle frame that includes a main tube extending obliquely downward to the rear of a vehicle body from a head pipe, and left and a right down tubes extending to the left rear and the right rear of the vehicle body from a lower part of the main tube. A swing unit is pivotally supported at a rear end of each of the left and the right down tubes.

Each of the down tubes are pressed in a plate shape at their rear end, and a shaft support section for supporting the swing unit for the pivot movement is formed in a portion that is pressed in the plate shape. Also, the down tube is made up of a hollow pipe. Another hollow pipe may be inserted in the rear end of the down tube. The rear side from the midpoint of a portion where the down tube and another hollow pipe are overlapped may be pressed in the plate shape, and the shaft support section for supporting the swing unit for the pivot movement may be formed in the pressed portion in the plate shape. A cross member may be spanned in a width direction between the rear ends of the left and the right down tubes.

Described herein for information is a motorcycle frame comprising:
a main tube extending obliquely downward and rearward from a head pipe; and
left and right down tubes extending rearward and respectively left and right from a lower part of the main tube,
wherein a shaft support section for pivotally supporting a swing unit disposed at a rear end of each of the left and right down tubes.

The rear end of at least one of the left and right down tubes is pressed in a plate shape, and the shaft support section is formed on the portion pressed in a plate shape.

The frame may further comprise an internal hollow pipe inserted within the rear end of at least one of the left and right down tubes, wherein said rear end comprising the internal hollow pipe may be pressed to form a plate shape.

A rear side from a midpoint of an overlapping portion between the at least one down tube and the internal hollow pipe may be pressed in the plate shape.

The shaft support section may be formed on the pressed portion in the plate shape.

A cross member may extend in a width direction between the rear ends of both of the left and right down tubes.

Described herein for information is a motorcycle comprising a motorcycle frame as described above.

In the motorcycle frame according to invention, it is possible to secure a width that is broad to some extent between rear ends of the down tubes. In this way, it is possible to support the swing unit for the pivot movement at a position with a broader width with the swing unit being pivotally supported at the rear ends of each of the down tubes. Therefore, the force acting on the motorcycle frame from the swing unit can be relaxed.

Each down tube is made up of the hollow pipe. Another or internal hollow pipe may be inserted in the rear end of the down tube. The rear side of a portion from the midpoint where the down tube and the internal hollow pipe are overlapped may be pressed in the plate shape. The shaft support section is formed in the pressed portion in the plate shape. In the above case, the shaft support section becomes thick, and thus is able to attain the strength large enough to pivotally support the swing unit. The frame rigidity can be further increased by coupling the rear ends of the left and the right down tubes with the cross member.

### BRIEF DESCRIPTION OF THE DRAWINGS

These and other aspects of the present invention will now be described, by way of example only, with reference to the accompanying drawings, in which:
FIG. 1 is a side view of a motorcycle equipped with a frame according to a first embodiment of the present invention;
FIG. 2 is a plan view showing the frame of the motorcycle according to the embodiment of the present invention;
FIG. 3 is a rear view of a rear end of a down tube seen from rear in a traveling direction of a vehicle;
FIG. 4 is a plan view showing a shaft support section;
FIG. 5 is a left side view of the frame of the motorcycle according to the embodiment of the present invention;
FIG. 6 is a right side view of the frame of the motorcycle according to the embodiment of the present invention;
FIG. 7 is a side view of a motorcycle equipped with a frame according to a second embodiment of the present invention; and
FIG. 8 is a side view of a frame of an known motorcycle.

### DETAILED DESCRIPTION OF THE DRAWINGS

A description will hereinafter be made of a motorcycle according to an embodiment of the present invention with reference to the drawings. It should be noted that members or portions that give the same effects are denoted by the same reference numerals and symbols in the drawings. Also, the present invention is not limited to the embodiments described below.

### Embodiment 1

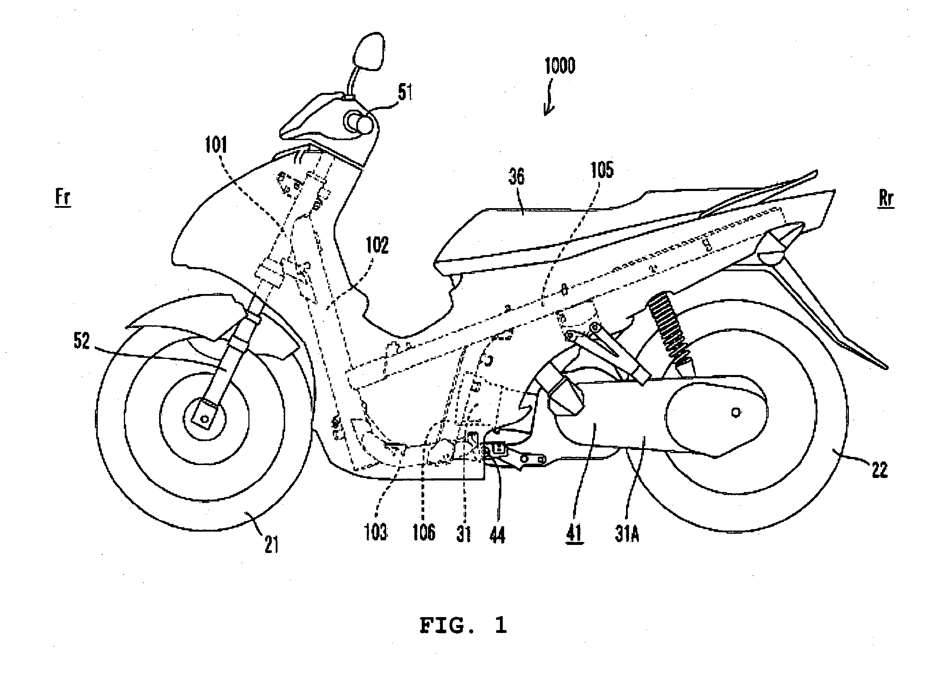

FIGs. 1 to 6 show a first embodiment of the present invention.

A motorcycle 1000 of this embodiment is, as shown in FIG. 1, one having a frame structure of a so-called underbone type.

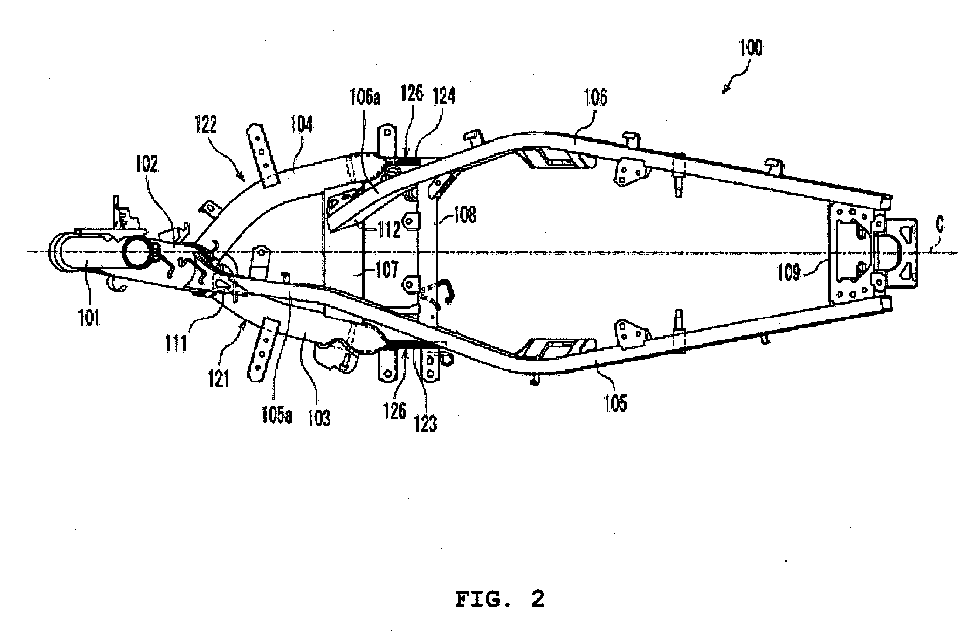

As shown in FIG. 2, a frame 100 of the motorcycle 1000 is provided with a head pipe 101, a main tube 102, left and right down tubes 103, 104, and left and right seat rails 105, 106. In this embodiment, the head pipe 101, the main tube 102, the left and right down tubes 103, 104, and the left and right seat rails 105, 106 are joined by means of welding. A coupling structure of each member is not limited to welds, but an appropriate method may be chosen accordingly in view of rigidity, durability, workability, a material of each member or the like.

Steering handlebars 51 and front forks 52 (see FIG. 1), which are not shown in FIG. 2, are attached to the head pipe 101. Therefore, the head pipe 101 is disposed along a center plane c in a vehicle width direction.

The main tube 102 extends obliquely downward to the rear of a vehicle body from the head pipe 101. In this embodiment, an upper end of the main tube 102 is coupled to the head pipe 101, which is disposed along the center plane c in the vehicle width direction. However, the main tube 102 is disposed to be inclined with respect to the center plane c in the vehicle width direction. In this embodiment, as shown in FIG. 2, the main tube 102 is inclined to the left side in a traveling direction of the vehicle with respect to the center plane c in the vehicle width direction.

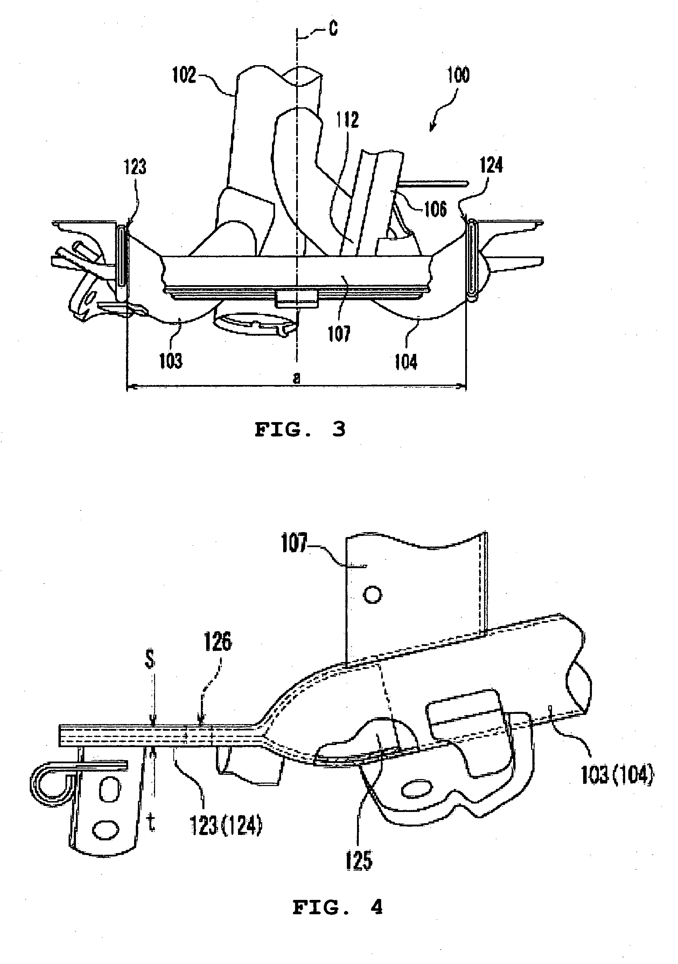

The left and right down tubes 103, 104 extend rearward and respectively leftward and rightward of the vehicle body from a lower part of the main tube 102 in a manner that a distance therebetween gradually increases. In this embodiment, the left and the right down tubes 103, 104 are curved toward the main tube 102, which is medially located, and are coupled to the lower part of the main tube 102. Positions on the main tube where the front ends of both the left and the right down tubes are coupled differ in terms of height (see FIG. 3). In this embodiment, the down tube 104, which is located on the right side in the traveling direction of the vehicle, is positioned higher than the down tube 103 on the left side.

Furthermore, because the main tube 102 is inclined to the left, front parts of the left and the right down tubes 103, 104 are in slightly different shapes from each other. The degree of curvature of the left down tube 103 is gentle compared to that of the right down tube 104.

In this embodiment, the left and the right shapes of the down tubes 103, 104 are adjusted by shapes of respective curved sections 121, 122 in the front region thereof. The down tubes 103, 104 are formed to be generally symmetrical with respect to the center plane in the vehicle width direction rearward of the curved sections 121, 122. Also, in this embodiment, an inter-tube cross member 107 for connecting the left and the right down tubes 103, 104 is coupled to rear parts of the down tubes 103, 104. The rigidity in the width direction between the left and the right down tubes 103, 104 is secured by the inter-tube cross member 107.

Shaft support sections 123, 124 for supporting a swing unit 41 are respectively formed at rear ends of the down tubes 103, 104. The swing unit 41 in the first embodiment is constituted with a unit that includes an engine 31, a driveline or transmission 31A for transmitting driving force of the engine 31 to a rear wheel, and a rear wheel 22 and that swings about a pivot shaft 44, which will be described later.

FIG. 3 is a view of the shaft support sections 123, 124 at the rear ends of the down tubes 103, 104 seen from the rear in the traveling direction of the vehicle. In the frame 100 in which the left and the right down tubes 103, 104 extend to the rear of the vehicle body from the lower part of the main tube 102 so as to gradually distance from each other, as shown in FIG. 2 and FIG. 3, width "a" that is broad to some extent can be secured between the rear end of the down tube 103 and that of the down tube 104. As described above, because the shaft support sections 123, 124 for attaching the swing unit 41 (see FIG. 1) are formed at the rear ends of the down tubes 103, 104, it is possible to support the swing unit 41 for the pivot movement at a position with the broader width. For example, when the vehicle travels along a curved path, torsional force acts on the shaft support sections 123, 124 via a rear wheel and a swing arm. Even in such a case where the force generating torsion is exerted from the swing unit 41 on the shaft support sections 123, 124, it is possible to support the swing unit 41 in a further stable condition due to the broadness of the shaft support sections 123, 124 for supporting the swing unit 41 for the pivot movement.

In this embodiment, the rear ends of the down tubes 103, 104 are pressed in a plate shape, and the shaft support sections 123, 124 for supporting the swing unit 41 for the pivot movement are formed in portions pressed in the plate shape.

In detail, in this embodiment, as shown in FIG. 4, each of the down tubes 103, 104 is made up of a hollow pipe. Further, another hollow pipe 125 is then inserted in the rear end of each of the down tubes 103, 104, and is overlapped with each of the down tubes 103, 104. The rear side from the midpoint of an overlapped portion is then pressed in the plate shape. In this embodiment, as shown in FIG. 4, the overlapped portion is pressed in directions of arrows s, t (from either side of the vehicle width direction). Then, each of the shaft support sections 123, 124 is formed in a portion that is pressed in the plate shape. In this embodiment, an attachment hole 126 for attaching the pivot shaft 44 (see FIG. 1) of the swing unit 41 is formed on each of the shaft support members 123, 124.

As described above, another hollow pipe 125 is inserted in the rear end of each of the down tubes 103, 104, and is overlapped with each of the down tubes 103, 104. The rear side from the midpoint of the overlapped portion is then pressed in the plate shape, and each of the shaft support sections 123, 124 is formed in the portion that is pressed in the plate shape. Accordingly, it is possible to improve strength of the shaft support sections 123, 124 and to improve durability of such portions. Also, because a bracket for pivotally supporting the swing unit 41 is not separately provided, it is possible to lighten the frame 100. In addition, compared to a case where the bracket is attached separately, it is possible to lower the manufacturing cost. Further, if the bracket is separately welded, there is a possible occurrence of a welding defect, and thus, the quality inspection and the like are additionally required. However, in the above embodiment, the quality can be stabilized in comparison with the case where the bracket is separately welded.

Such a pivot support structure for the swing unit can be adopted to various types of motorcycle frames. Motorcycles are not limited to underbone-type motorcycles, but the present invention is also applicable to, for example, scooter-type motorcycles.

Description will be hereinafter made of other characteristics of the motorcycle according to this embodiment.

The left and right seat rails 105, 106 are, as shown in FIG. 2, members disposed in the rear of the down tubes 103, 104 for supporting a seat 36 (see FIG. 1). The seat rails 105, 106 are respectively disposed on the left and the right of a vehicle. In this embodiment, a front end 111 of the left seat rail 105 is coupled to a main tube 102. A front end 112 of the right seat rail 106 is coupled to the cross member 107 and thus coupled to the down tubes 103, 104 via said cross member 107.

In this embodiment, the seat rail 106 coupled to the down tubes in a manner described above lets a portion 106a that hangs downward to extend slightly into the inner side, and thus permits the frame 100 to define a slim profile in the width direction. In addition, in this embodiment, the main tube 102 is inclined to the left with respect to the center plane c in the vehicle width direction, and the seat rail 105 on the inclined side of the main tube 102 is coupled to the main tube 102. That is, compared to a case where the seat rail 106, which is located on the opposite side from the inclined side of the main tube 102, is coupled to the main tube 102, it is possible to form a larger space along the center plane c in the vehicle width direction.

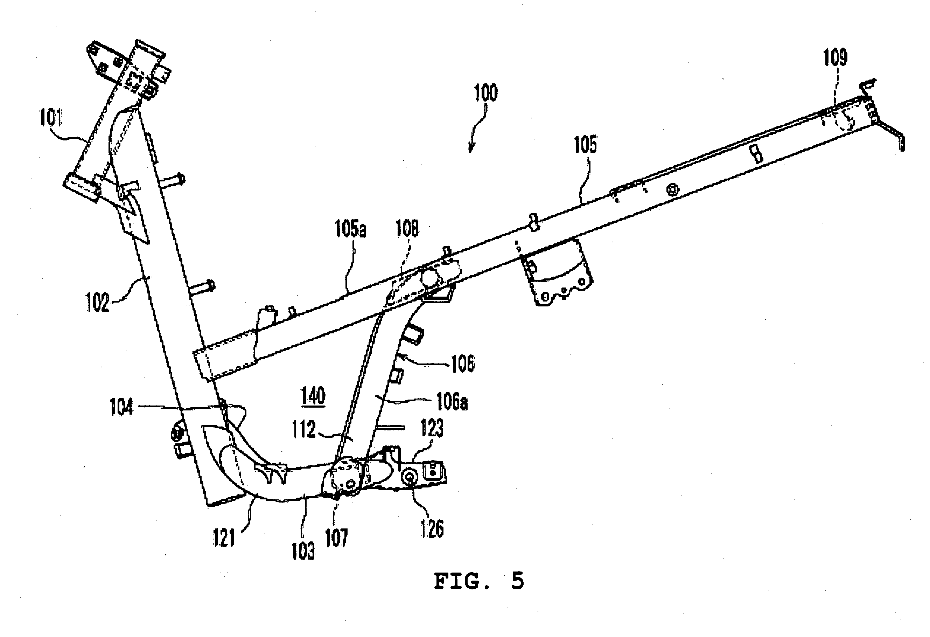

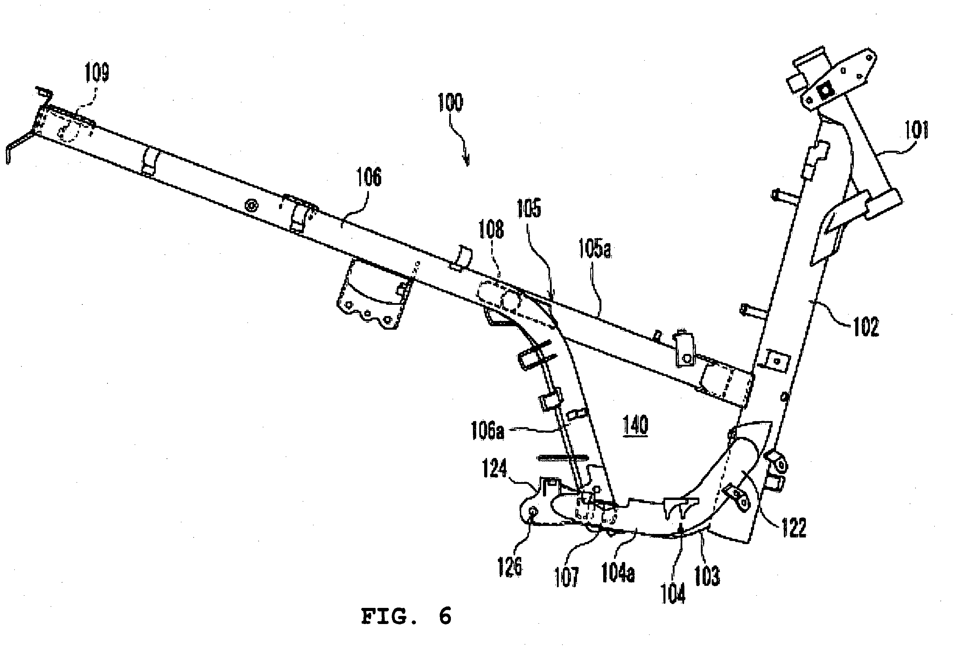

In other words, a path along which the left seat rail 105 extends is different from a path along which the right seat rail 106 extends in the side view. In this embodiment, as shown in FIG. 5, the left seat rail 105 extends forward to the main tube 102. Also, as shown in FIG. 6, the right seat rail 106 extends downward to the right down tube 104 while hanging down. Therefore, as shown in FIG. 2, it is possible to form a larger space for effectively mounting the components on the right side of a portion 105a in which the left seat rail 105 extends forward to the main tube 102 and on the left side of the portion 106a in which the right seat rail 106 hangs downward.

The inter-tube cross member 107 is spanned between the left and the right down tubes 103, 104. As shown in FIG. 2, first and second inter-rail cross member 108, 109 are spanned between the left and right seat rails 105, 106, respectively at the front and rear thereof in the width direction in order to couple the left and the right seat rails 105, 106. In addition to these cross members 107, 108, 109, in this embodiment, the seat rail 105 out of the left and the right seat rails 105, 106 is coupled to the main tube 102 at its front end, and the other seat rail 106 is coupled to the down tube 103 at its front end.

As described above, in this embodiment, one of the inter-tube cross member 107 and the first and second inter-rail cross members 108, 109 is spanned in at least one place in the width direction either between the left and right down tubes 103, 104 or between the left and the right seat rails 105, 106. The cross members 107, 108, 109 form a truss structure 140 together with the left and right down tubes 103, 104 and the left and right seat rails 105, 106. In this embodiment, the truss structure 140 readily secures the rigidity required as the frame 100 of the motorcycle 1000, and it is possible to reduce the thickness of each frame constructional member required for obtaining the equivalent strength of the rigidity. Consequently, it is possible to lighten the frame 100 as a whole.

In this embodiment, the head pipe 101 is disposed along the center plane c in the vehicle width direction, and the main tube 102 is inclined from the head pipe 101 with respect to the center plane c in the vehicle width direction. In this way, it is possible to form a larger space below the main tube 102 with the main tube 102 being inclined with respect to the center plane c in the vehicle width direction. Therefore, it is possible to mount a larger component than a conventional one to the portion, and to effectively mount the components around the main tube 102. For example, in this embodiment, because a large space can be secured around the main tube 102, it is possible to put together and dispose electric components connected to various switches and the like attached to a steering gear and handlebars. Consequently, the attachment work thereof can be facilitated.

### Embodiment 2

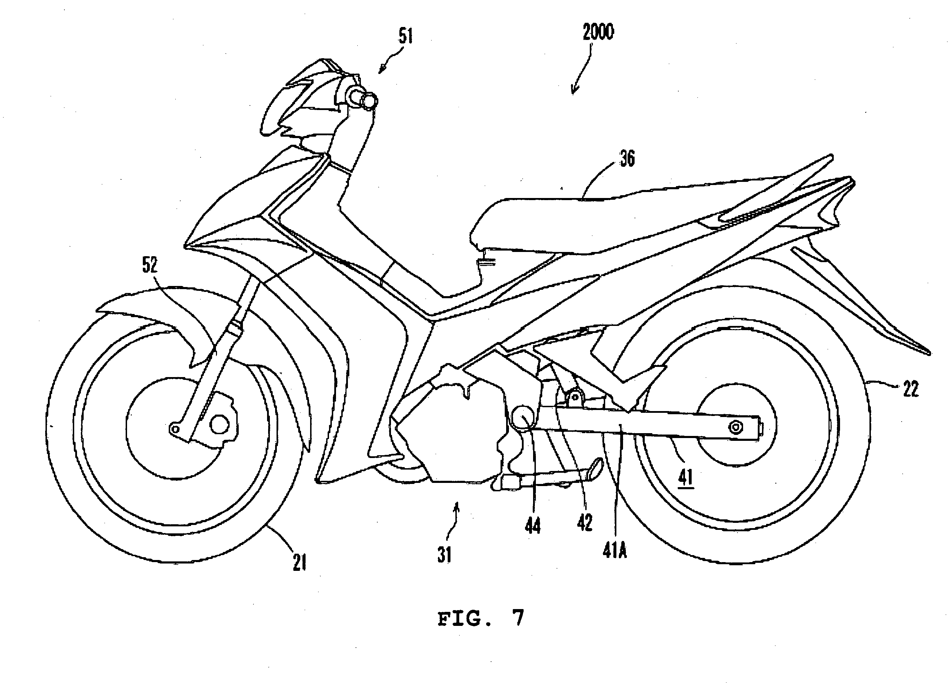

Fig. 7 shows a second embodiment. Members that give the same effects are denoted by the same reference numerals, and descriptions thereof will be omitted. The same frame structure as one in the first embodiment is adopted in a motorcycle 2000 in this second embodiment. The swing unit 41 in this embodiment is composed of an arm 41A, which swings about the pivot shaft 44, and the rear wheel 22.

So far the description has been made of the motorcycle frame according to the embodiment of the present invention; however, the motorcycle frame according to the present invention is not limited to the above embodiment.

For example, shapes of a head pipe, main tube, down tube, and seat rail are not limited to those described above. Specific shapes of the head pipe, the main tube, the down tube, and the seat rail may be appropriately modified in accordance with a vehicle. In addition, for example, one or more backstays may be further placed between the down tubes and the seat rails. The attachment positions of the cross members and the brackets can also be modified accordingly.

In the above embodiment, the structure in which the down tubes are directly welded to the main tube is illustrated; however, the structure for coupling the down tubes to the main tubes is not limited to the above embodiment. For example, the cross member may be coupled to the main tube, and then the fore-ends of the down tube may be coupled to the cross member. Further, the above embodiment illustrates a configuration that the inter-tube cross member 107 is spanned between the rear parts of the left and the right down tubes 103, 104 and that the front end 112 of the right seat rail 106 is coupled to the inter-tube cross member 107 and is coupled to the down tubes 103, 104 via the inter-tube cross member 107. As described above, the seat rail coupled to the down tubes may be coupled to the down tubes via the inter-tube cross member, which is spanned between the rear parts of the left and the right down tubes, or may be coupled directly to the down tubes. Furthermore, the configuration in which the main tube 102 is inclined to the left with respect to the center plane c in the vehicle width direction is illustrated; however, the main tube 102 may be disposed along the center plane c in the vehicle width direction, or may be inclined to the right with respect to the center plane c in the vehicle width direction. Moreover, in the above embodiment, the seat rail 105 on the inclined side of the main tube 102 is coupled to the main tube 102; however, the seat rail 106 on the opposite side from the inclined side of the main tube 102 may be coupled to the main tube 102.

The present invention can be utilized for a frame structure of a motorcycle.

### Description of Reference Numerals and Symbol

1000: motorcycle
41: swing unit
100: frame
101: head pipe
102: main tube
103: left down tube
104: right down tube
105: left seat rail
106: right seat rail
107: inter-tube cross member
108, 109: first and second inter-rail cross members
123, 124: shaft support section
140: truss structure
c: center plane in a vehicle width direction

## Claims

1. A motorcycle frame (100) comprising:
a main tube (102) extending obliquely downward and rearward from a head pipe (101); and
left and right down tubes (103, 104) extending rearward and respectively leftward and rightward from a lower part of the main tube (102), wherein
each of the left and right down tubes (103, 104) is made up of a hollow pipe; **characterized in that**
a shaft support section (123, 124) for pivotally supporting a swing unit (41) is formed at a rear end of each of the left and right down tubes (103, 104), wherein
the rear end of each of the left and right down tubes (103, 104) has been formed by being pressed in a plate shape, and each shaft support section (123, 124) has been formed on the portion pressed in the plate shape.

2. The motorcycle frame (100) according to Claim 1, further comprising an internal hollow pipe (125) inserted within the rear end of at least one of the left and right down tubes (103, 1 04), wherein said rear end comprising the internal hollow pipe (125) has been formed by being pressed in the plate shape.

3. The motorcycle frame (100) according to Claim 2, wherein a rear side of said rear end comprising the internal hollow tube from a midpoint of an overlapping portion between the at least one down tube (103, 104) and the internal hollow pipe (125) has been formed by being pressed in the plate shape.

4. The motorcycle frame (100) according to any preceding Claim, wherein a cross member (107) extends in a width direction between the rear ends of the left and right down tubes (103, 104).

5. Amotorcycle (1000) comprising a motorcycle frame (100) according to any preceding Claim.

## Patentansprüche

1. Motorradrahmen (100), der aufweist:
ein Hauptrohr (102), das sich schräg nach unten und nach hinten von einem Steuerrohr (101) erstreckt; und
ein linkes und ein rechtes unteres Rahmenrohr (103, 104), die sich nach hinten und jeweils nach links und rechts von einem unteren Teil des Hauptrohres (102) aus erstrecken, wobei
ein jedes von linkem und rechtem unteren Rahmenrohr (103, 104) aus einem Hohlrohr besteht; **dadurch gekennzeichnet, dass**
ein Schaftträgerabschnitt (123, 124) für das drehbare Tragen einer Schwingeinheit (41) an einem hinteren Ende eines jeden von linkem und rechtem unteren Rahmenrohr (103, 104) ausgebildet ist, wobei
das hintere Ende eines jeden von linkem und rechtem unteren Rahmenrohr (103, 104) dadurch gebildet wurde, dass es in eine Plattenform gepresst wird, und wobei ein jeder Schaftträgerabschnitt (123, 124) in dem Abschnitt gebildet wurde, der in der Plattenform gepresst wurde.

2. Motorradrahmen (100) nach Anspruch 1, der außerdem ein inneres Hohlrohr (125) aufweist, das innerhalb des hinteren Endes von mindestens einem von linkem und rechtem unteren Rahmenrohr (103, 104) eingesetzt wird, wobei das hintere Ende, das das innere Hohlrohr (125) aufweist, gebildet wurde, indem es in der Plattenform gepresst wurde.

3. Motorradrahmen (100) nach Anspruch 2, bei dem eine hintere Seite des hinteren Endes, das das innere Hohlrohr aufweist, von einem Mittelpunkt eines sich überdeckenden Abschnittes zwischen dem mindestens einen unteren Rahmenrohr (103, 104) und dem inneren Hohlrohr (125) gebildet wurde, indem es in der Plattenform gepresst wurde.

4. Motorradrahmen (100) nach einem der vorhergehenden Ansprüche, bei dem sich ein Querelement (107) in einer Breitenrichtung zwischen den hinteren Enden des linken und des rechten unteren Rahmenrohres (103, 104) erstreckt.

5. Motorrad (1000), das einen Motorradrahmen (100) nach einem der vorhergehenden Ansprüche aufweist.

## Revendications

1. Cadre de motocycle (100) comprenant :
un tube principal (102), s'étendant de manière oblique vers le bas et vers l'arrière à partir d'un tube de direction (101) ; et
des tubes inférieurs de gauche et de droite (103, 104), s'étendant vers l'arrière et respectivement vers la gauche et vers la droite à partir d'une partie inférieure du tube principal (102) ; dans lequel
chacun des tubes inférieurs de gauche et de droite (103, 104) est fabriqué à partir d'un tube creux ; **caractérisé en ce que**
une section de support d'arbre (123, 124), pour supporter de manière pivotante une unité oscillante (41), est formée au niveau d'une extrémité arrière de chacun des tubes inférieurs de gauche et de droite (103, 104), dans lequel
l'extrémité arrière de chacun des tubes inférieurs de gauche et de droite (103, 104) a été formée par pression dans une forme en plaque, chaque section de support d'arbre (123, 124) ayant été formée sur la partie pressée dans la forme en plaque.

2. Cadre de motocycle (100) selon la revendication 1, comprenant en outre un tube creux interne (125), inséré dans l'extrémité arrière d'au moins un des tubes inférieurs de gauche et de droite (103, 104), ladite extrémité arrière comprenant le tube interne creux (125) ayant été formée par pression dans la forme en plaque.

3. Cadre de motocycle (100) selon la revendication 2, dans lequel un côté arrière de ladite extrémité arrière comprenant le tube interne creux, s'étendant d'un point central d'une partie à chevauchement entre le au moins un tube inférieur (103, 104) et le tube interne creux (125), a été formé par pression dans la forme en plaque.

4. Cadre de motocycle (100) selon l'une quelconque des revendications précédentes, dans lequel une traverse (107) s'étend dans une direction de la largeur entre les extrémités arrière des tubes inférieurs de gauche et de droite (103, 104).

5. Motocycle (1000), comprenant un cadre de motocycle (100) selon l'une quelconque des revendications précédentes.
